Europäisches Patentamt

European Patent Office

Office européen des brevets

(19)

(11) Publication number: **0 042 681**
A2

(12)

# EUROPEAN PATENT APPLICATION

(21) Application number: **81302472.6**

(22) Date of filing: **03.06.81**

(51) Int. Cl.³: **B 01 F 7/16**

(30) Priority: **24.06.80 GB 8020637**

(43) Date of publication of application:
**30.12.81 Bulletin 81/52**

(84) Designated Contracting States:
**DE FR GB IT SE**

(71) Applicant: THORN DOMESTIC APPLIANCES
(ELECTRICAL) LIMITED
Thorn House Upper St. Martin's Lane
London WC2H 9ED(GB)

(72) Inventor: Tett, Anthony Francis
45, Maylands Road
Havant Hampshire(GB)

(74) Representative: Marsh, Robin Geoffrey et al,
THORN EMI PATENTS LIMITED Blyth Road
Hayes Middlesex, UB3 1BP(GB)

(54) A beater tool for a domestic food mixing device.

(57) A beater tool for a domestic food mixing device
comprises a central hub, adapted to be rotated by a suitable
drive means, a support extending radially from the hub and a
plurality of radially spaced blades extending from the
support in a direction generally parallel to the axis of rotation
of the hub. Typically, the tool is associated with an annular
bowl having a central aperture to accommodate the hub and
drive shaft therefor. Preferably the outermost and innermost
of the blades are arranged, in operation, to wipe the insides
of the outer and inner walls respectively of the bowl.

FIG. 1

EP 0 042 681 A2

- 1 -

## A BEATER TOOL FOR A DOMESTIC FOOD MIXING DEVICE

The present invention relates to a beater tool for a domestic food mixing device, especially, but not exclusively, a food mixing device of the type known as a food processor.

Many designs of food mixing device have been proposed in the past. In recent years so-called food processors have been produced in which the mixing bowl is of a very "square" shape, having a flat circular base and upstanding outer and inner walls, each of which meets the base in a relatively small radius of curvature. The walls define between them an annular bowl for the food to be mixed. It is important in a mixing device that as little as possible of the food should be left adjacent the walls of the bowl during the mixing, to ensure efficient mixing, and after the mixing has been completed, to save wastage. The existing beater tools have not been very satisfactory in this connection.

It is now proposed, according to the present invention, to provide a beater tool for a domestic food mixing device having a bowl, the tool comprising a hub securable to a rotatable shaft of the food mixing device, a support on said hub extending radially of the hub axis and a plurality of radially spaced and generally axially extending blades mounted on the support.

Preferably the radially innermost and outermost ones of the blades are arranged so that they move relatively close to the inner and outer walls respectively of the bowl. Preferably also, the tips of all of the blades are disposed close to the base. This ensures a good mixing action.

Preferably the blades extend only in one axial direction from the support, that is to say the support is not at an intermediate position along the length of the blades, but at one end of the blades. If the bowl is the type described, the blades are preferably all substantially the same axial length.

If the blades are made of elongate cross-section, they will provide a better stirring action than if they are of a generally circular cross-section. preferably the major axis of the cross-section is inclined to a tangent to a circle centred on the rotary axis of the hub and passing through the centre of cross-section of the respective blade. The blades are preferably inclined between 15° and 45° (and preferably about 30°) to the tangent to the respective circle, in a direction to urge the food being mixed radially inwardly. This provides a better mixing action because the centrifugal force, caused by the rotation of the beater tends to move the food radially outwardly. However, advantageously, the radially innermost blade, is inclined to its respective tangent in the opposite sense to that of all of the other blades so that it can scrape the inner wall of the bowl.

The blades are advantageously themselves formed of plastics material, since this is relatively soft and will not damage the bowl. Advantageously, the blades, the support and the hub are all formed in one piece from a plastics material, e.g. by injection moulding.

In order that the invention may more readily be understood, the following description is given, merely by way of example, reference being made to the accompanying drawings, in which:-

Figure 1 is a side elevation of one embodiment of beater tool according to the invention: and

Figure 2 is an underneath plan view of the beater of Figure 1.

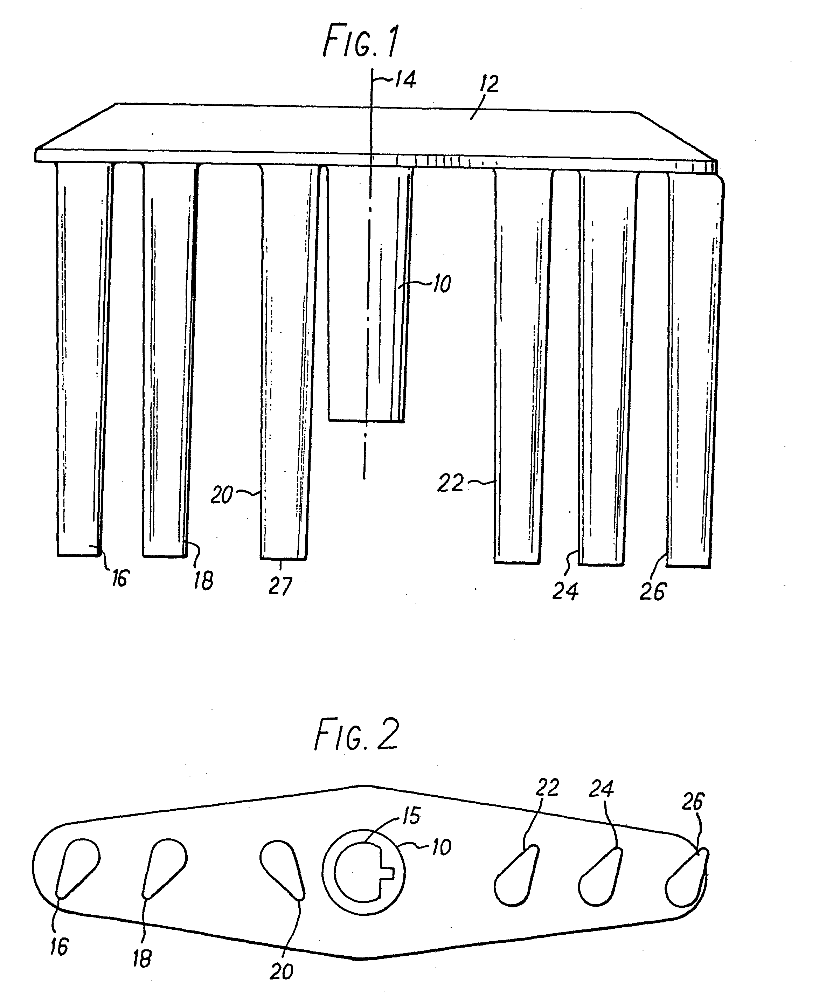

The beater includes a hub 10 which is integrally formed with a support 12 which, as shown in the drawing, comprises two arms which extend radially outwardly, in opposite directions, from the axis 14 of the hub 10. The support 12 forms a handle which facilitates removal of the tool from the mixture. Of course the support 12 could take another form, for example, being a disc. It will be noted from Figure 2 that the centre of the hub 10 is provided with a non-circular cross-section bore 15 which is adapted to engage on a correspondingly shaped drive shaft which is not shown, as it is conventional, but which extends upwardly from a drive means mounted beneath the base of the bowl. It will be appreciated that both the hub 10 and the drive shaft are closely surrounded by the inner wall of the mixer bowl.

Extending parallel to the axis 14 are six blades 16, 18, 20, 22, 24, 26. These blades are all of the same length and thus their lower surfaces 27 lie in a common plane perpendicular to the axis 14.

If reference is again made to Figure 2, it will be seen that each of the blades 16 to 26 is of elongate cross-section, the cross-section being rounded at one end and pointed at the other. It will be seen that the blades 16, 18, 22, 24 and 26 are all inclined in the same sense, with regard to the direction of rotation, at about $30^{\circ}$ to a tangent to a circle centred on the axis 14 and passing through the centre of cross-section of the respective blade. The pointed end of the radially outermost blade 26 is arranged to scrape the outer wall of the bowl. The radially innermost blade 20, on the other hand, is inclined, at approximately the same angle, in the opposite sense to the other blades so that its pointed end can scrape the inner wall of the bowl. This latter expedient not only clears food from the inner wall, but also assists in the mixing process by moving radially outwardly the food with which blade 20 comes into contact.

In use, the hub is mounted on a drive shaft so that the beater element extends into the bowl of the mixing device. The shaft is rotated so that the beater rotates in a clockwise direction, as viewed from above, that is in an anti-clockwise direction as shown in Figure 2. This has the effect of urging the material to be mixed radially inwardly with the blades 16, 18, 22, 24 and 26, the blade 26, as mentioned above, scraping the outer wall of the bowl. The lower surfaces 27 of the blades lie immediately adjacent the bottom of the bowl and therefore keep this well cleaned. The blade 20, on the other hand, as has been mentioned, scrapes the inner wall of the bowl and also tends to urge the food being mixed radially outwardly in contradirection to that of the other blades, to enhance the mixing effect.

It will be appreciated that this construction provides a very efficient mixing of the food being treated.

Another important feature of the tool is that the blades on one side of the hub 10 are interleaved in radial spacing with those on the other side of the hub so that the blades together sweep substantially the whole volume of the bowl. It can be seen from Figure 2 that the blades are arranged in the following order of increasing radial distance from hub 10:

20, 22, 18, 24, 16 26.

In the example shown, the volumes of revolution swept out by the various blades are all substantially equal and, with the exception of a small gap between the volumes of revolution swept out by blades 20 and 22 (caused by the different senses of angular inclination of the blades) the volumes of revolution swept out by blades that are neighbours (in the sense of radial spacing from the hub 10) substantially abut without overlap. It is of course possible, without departing from the scope of the invention, to use in one tool blades of differing profiles, spacing and size and/or to arrange for varying degrees of overlap between the volumes of reolution swept out by the blades.

If desired, the leading (pointed) ends of the blades may be serrated or formed with some generally undulatory shaping to tend to move the mixture vertically as well as horizontally.

In a further development, in which the blades are not formed integrally with the handle 12, but are pivotally mounted thereto, their angle of attack may be varied, either individually or as a unit, to suit different mix consistencies.

What we claim is:

1.      A beater tool for a domestic food mixing device having a bowl, the tool comprising a hub securable to a rotatable shaft of the food mixing device, a support on said hub extending radially of the hub axis and a plurality of radially spaced and generally axially extending blades mounted on the support.

2.      A tool according to Claim 1 wherein said support is shaped to form a handle by means of which the tool can be withdrawn from the bowl.

3.      A tool according to either of claims 1 or 2 wherein the support supports one end of each of said blades.

4.      A tool according to Claim 3 wherein, in operation, the free ends of the blades terminate in a common plane close to the base of said bowl.

5.      A tool according to any preceding claim wherein the radially innermost and radially outermost blades are disposed, in operation, to scrape inner and outer walls respectively of said bowl.

6.      A tool according to any preceding claim wherein all of said blades are of elongate cross-section.

7.      A tool according to Claim 6 wherein the major axis of the cross-section of each of said blades is inclined to a tangent to a respective circle centred on the axis of said hub.

8.      A tool according to Claim 7 wherein the angle of inclination is between $15^{\circ}$ and $45^{\circ}$.

9.      A tool according to Claim 8 wherein the said major axis of one at least of said blades has an equal but opposite angle of inclination to that of the others of said blades.

10.     A tool according to any preceding claim wherein the blades, the support and the hub are an integral unit moulded from plastics material.

*FIG.1*

*FIG. 2*